(19)

Europäisches
Patentamt
European
Patent Office
Office européen
des brevets

(11)     EP 3 514 268 B1

(12)     **EUROPEAN PATENT SPECIFICATION**

(45) Date of publication and mention
of the grant of the patent:
**11.10.2023 Bulletin 2023/41**

(21) Application number: **17850690.3**

(22) Date of filing: **30.08.2017**

(51) International Patent Classification (IPC):
**D01F 6/12** *(2006.01)*     **D01D 5/12** *(2006.01)*

(52) Cooperative Patent Classification (CPC):
**D01F 6/12; D01D 5/12**

(86) International application number:
**PCT/JP2017/031120**

(87) International publication number:
**WO 2018/051787 (22.03.2018 Gazette 2018/12)**

(54) **VINYLIDENE FLUORIDE RESIN FIBERS AND SHEET-LIKE STRUCTURE**

VINYLIDENFLUORIDHARZFASERN UND BLATTFÖRMIGE STRUKTUR

FIBRES DE RÉSINE À BASE DE FLUORURE DE VINYLIDÈNE, ET STRUCTURE SOUS FORME
DE FEUILLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.09.2016 JP 2016179949**

(43) Date of publication of application:
**24.07.2019 Bulletin 2019/30**

(73) Proprietor: **Kureha Corporation**
**Chuo-ku**
**Tokyo 103-8552 (JP)**

(72) Inventor: **SAIGUSA, Kotaku**
**Tokyo 103-8552 (JP)**

(74) Representative: **Novagraaf Group**
**Chemin de l'Echo 3**
**1213 Onex / Geneva (CH)**

(56) References cited:
WO-A1-2016/147713     JP-A- S6 028 510
JP-A- S6 141 318     JP-A- S57 143 511
JP-A- S61 225 310     JP-A- 2013 055 910
US-A- 3 707 592

• ANJA LUND ET AL: "Melt Spinning of b-Phase
Poly(vinylidene fluoride) Yarns With and Without
a Conductive Core", JOURNAL OF APPLIED
POLYMER SCIENCE, JOHN WILEY & SONS, INC,
US, vol. 120, no. 2, 15 April 2011 (2011-04-15),
pages 1080-1089, XP007916596, ISSN: 0021-8995,
DOI: 10.1002/APP.33239 [retrieved on
2010-11-08]

**Description**

Technical Field

The present invention relates to vinylidene fluoride resin fibers and a sheet-like structure.

Background Art

Due to vinylidene fluoride resins having excellent mechanical characteristics, their development is progressing to enable expanded applications into a variety of fields.

For example, Patent Document 1 discloses vinylidene fluoride resin molded product having a high Young's modulus and excellent surface characteristics and transparency.

Patent Document 2 discloses a vinylidene fluoride resin with improved tensile strength and a method for manufacturing the same.

Patent Document 2 also discloses a method for obtaining a filament by spinning without going through a process of drawing the vinylidene fluoride resin at a high draft ratio. Patent Documents 3 and 4 and Document 5 disclose further vinylidene fluoride multifilament fibers and their production methods.

Citation List

Patent Literature

Patent Document 1: JP S59-41310 A (published March 7, 1984)
Patent Document 2: JP S60-28510 A (published February 13, 1985)
Patent Document 3: US3707592 A (published December 26, 1972)
Patent Document 4: JP2013055910 A (published March 28, 2013)
Document 5: Anja Lund et. al.: "Melt Spinning of b-Phase Poly(vinylidene fluoride) Yarns With and Without a Conductive Core", Journal of Applied Polymer Science, vol. 120, no. 2, 15 April 2011, pages 1080-1089.

Summary of Invention

Technical Problem

However, when spun by the method described in Patent Document 2, necking, whereby the filament deforms due to stress in the spin-line, and the filament becomes small diameter rapidly. As a result, the molecular chain is oriented, however, it remains un-oriented state for almost amorphous region. For this reason, there is a problem that a fiber obtained using filaments in which numerous un-oriented amorphous regions are present in this method has a lower thermal shrinkage than drawn yarn which was made by a general method.

The present invention takes the above problem into consideration, and an object thereof is to realize a vinylidene fluoride resin fiber having excellent mechanical properties such as strength and a high thermal shrinkage.

Solution to Problem

The present inventors discovered that a factor that improves mechanical properties is the presence of rigid amorphous regions. Furthermore, they discovered that in the process in which orientation proceed, in other words, the process in which the degree of orientation increases, rigidity of the amorphous region appears and the thermal shrinkage increases. The present inventors thereby achieved the present invention. The present invention, which is defined in the appended claims, may be expressed as follows.

The vinylidene fluoride resin fiber according to the present invention is a fiber obtained using a plurality of vinylidene fluoride resin filaments, the fiber having a glass transition temperature of not lower than -28°C and a thermal shrinkage at 100°C of not less than 2%, wherein the inherent viscosity of the vinylidene fluoride resin is not less than 0.75 dL/g and not greater than 0.90 dL/g.

The sheet-like structure according to the present invention is obtained using the vinylidene fluoride resin fiber of the present invention.

Advantageous Effects of Invention

The present invention can provide a vinylidene fluoride resin fiber having excellent mechanical properties such as strength and a high thermal shrinkage.

Description of Embodiments

An embodiment of the vinylidene fluoride resin fiber according to the present invention will be specifically described below.

Vinylidene fluoride resin fiber

The vinylidene fluoride resin fiber according to the present embodiment (also simply called "fiber" hereinafter) is a fiber obtained using a plurality of vinylidene fluoride resin filaments, wherein the fiber has a glass transition temperature of not lower than -28°C and a thermal shrinkage at 100°C of not less than 2%, wherein the inherent viscosity of the vinylidene fluoride resin is not less than 0.75 dL/g and not greater than 0.90 dL/g.

Filament

In the present specification, a filament signifies one single fiber. The vinylidene fluoride resin filament according to the present embodiment (also simply called "filament" hereinafter) signifies a filament made from a vinylidene fluoride resin. Note that the vinylidene fluoride resin will be described in detail later.
The length of the filament according to the present embodiment may be set as appropriate in accordance with the length of the fiber.
The diameter of the filament according to the present embodiment may be set as appropriate according to the application of the fiber and the like, but the filament diameter is preferably not less than 5 $\mu$m and not greater than 80 $\mu$m, more preferably not less than 10 $\mu$m and not greater than 60 $\mu$m, and even more preferably not less than 12 $\mu$m and not greater than 40 $\mu$m.
Note that in the present specification, filament length indicates the size of the filament in the longitudinal direction. Furthermore, filament diameter indicates the size of the filament in the direction perpendicular to the longitudinal direction.

Fiber

The fiber according to the present embodiment signifies a fiber structure obtained using a plurality of vinylidene fluoride resin filaments. The fiber of the present embodiment is obtained by unifying a plurality of filaments into a single bundle, and generally signifies a format called multifilament.
The number of filaments according to the present embodiment may be set as appropriate according to the application of the fiber and the like, and is not particularly specified.
The length of the fiber according to the present embodiment may be set as appropriate according to the application of the fiber and the like.

Glass transition temperature

In the present specification, the glass transition temperature (also called "Tg" hereinafter) indicates the temperature at which the viscoelasticity of the fiber start to change. That is, the glass transition temperature is the temperature at which micro-Brownian movement begins, and can be considered as the temperature at which the amorphous region starts to be mobile. In a vinylidene fluoride homopolymer, Tg typically occurs in the vicinity of -40°C. That is, in a case where the glass transition temperature occurs at a temperature higher than this, it means that the temperature region in which the amorphous region is mobile is higher, which reflects the rigidity of the amorphous region.
Due to the glass transition temperature of the fiber according to the present embodiment being not lower than -28°C, the amorphous region in the fiber is highly oriented, and this causes the fiber according to the present invention to exhibit rigidity.
Note that the above glass transition temperature does not change depending on the number of filaments in the fiber according to the present embodiment.
The glass transition temperature of the fiber according to the present embodiment is not lower than -28°C, but is preferably not lower than -26°C, more preferably not lower than -23°C, and even more preferably not lower than -20°C. The glass transition temperature is in this range from the perspective that rigidity of the amorphous region further improves.
The above glass transition temperature can be controlled by the manufacturing conditions when manufacturing the fiber according to the present embodiment. Specific control methods will be described later.

The glass transition temperature in the present embodiment is determined from dynamic viscoelasticity measurement. Specifically, using a dynamic viscoelasticity measuring device, dynamic viscoelasticity is measured with a test piece with length of 3 mm, at four frequencies of 0.5, 1.0, 5.0, and 10 Hz, in a measurement temperature range from -100°C to 180°C, at a temperature increasing rate of 2°C/minute. The glass transition temperature (Tg) is taken as the peak temperature of the dispersion derived from Tg occurring at a frequency of 10 Hz.

Thermal shrinkage

The thermal shrinkage in the present specification is the ratio of shrinkage occurring in the longitudinal direction of the fiber according to the present invention when heated at 100°C, and is determined by the following equation.

$$\text{Thermal shrinkage (\%)} = (L - LHT)/L \times 100 \, \P$$

wherein L indicates the skein length before heat treatment (m) and LHT indicates the skein length after heat treatment (m).

The fiber according to the present embodiment has a thermal shrinkage at 100°C of not less than 2%, and it is presumed that a fiber with a higher thermal shrinkage is more rigid.

Birefringence

In the present embodiment, the birefringence is measured using a generally used compensator. Specifically, is measured using the method described in the examples to be described later.

The average birefringence of the fiber according to the present embodiment is preferably not less than $30 \times 10^{-3}$, more preferably not less than $40 \times 10^{-3}$, and even more preferably not less than $45 \times 10^{-3}$. The birefringence is preferably in this range from the perspective that mechanical strength of the fiber improves.

Tensile strength

In the present embodiment, the tensile strength is measured using a generally used tensile tester. Specifically, it is measured using the method described in the examples to be described later.

The tensile strength of the fiber according to the present invention is preferably not less than 2.0 cN/dtex, more preferably not less than 3.1 cN/dtex, and even more preferably not less than 4.0 cN/dtex. The tensile strength is preferably in this range from the perspective that mechanical strength of the fiber improves.

Elongation at break

In the present embodiment, the elongation at break is measured using a generally used tensile tester. Specifically, it is measured using the method described in the examples to be described later.

The elongation at break of the fiber according to the present embodiment is preferably not greater than 50%, more preferably not greater than 40%, and even more preferably not greater than 25%. The elongation at break is preferably in this range from the perspective that mechanical strength of the fiber improves.

Vinylidene fluoride resin

In the present specification, vinylidene fluoride resin signifies a polymer of which the main component is a vinylidene fluoride (also called "VDF" hereinafter) monomer. The vinylidene fluoride resin according to the present embodiment may be a vinylidene fluoride copolymer of a vinylidene fluoride monomer and another monomer, or it may be a vinylidene fluoride homopolymer constituted of only one type of vinylidene fluoride monomer.

The other monomer in the present invention is preferably at least one type selected from the group consisting of hexafluoropropylene, trifluoroethylene, tetrafluoroethylene, and chlorotrifluoroethylene.

The vinylidene fluoride copolymer in the present invention contains preferably not less than 90 mol% and more preferably not less than 97 mol% of a vinylidene fluoride monomer, and is most preferably a vinylidene fluoride homopolymer. The content of vinylidene fluoride monomer is preferably in this range from the perspective that mechanical strength of the fiber improves.

Inherent viscosity

In the present embodiment, inherent viscosity is determined by dissolving a sample in the solvent dimethylformamide and measuring the time for which a certain volume of the liquid naturally drops in a capillary tube at 30°C using an Ubbelohde viscometer.

In the present invention the inherent viscosity of the vinylidene fluoride resin is not less than 0.75 dL/g and not greater than 0.90 dL/g.

Method of manufacturing vinylidene fluoride resin fiber

An embodiment of the method of manufacturing the fiber according to the present embodiment (also called "the present manufacturing method" hereinafter) will be specifically described below, but the present manufacturing method is not limited to the method below.

The present manufacturing method produces a fiber by producing a plurality of filaments made from a vinylidene fluoride resin and unifying those filaments. The method includes an extrusion and discharge process, a spinning process, and a drawing process.

The vinylidene fluoride resin used in the present manufacturing method may be any vinylidene fluoride copolymers and vinylidene fluoride homopolymers. These vinylidene fluoride copolymers and vinylidene fluoride homopolymers may be manufactured using well-known polymerization methods and equipment. Furthermore, commercially available products may be used as the vinylidene fluoride copolymers and vinylidene fluoride homopolymers.

In the extrusion and discharge process, melted vinylidene fluoride resin is discharge from the spinning nozzle, and an un-drawn fiber of vinylidene fluoride resin is obtained. At that time, the vinylidene fluoride resin may be melted at, for example, from 240°C to 270°C. The nozzle diameter of the spinneret may be adjusted as appropriate depending on the inherent viscosity and the like of the discharged vinylidene fluoride resin, and may be, for example, from 0.10 to 1.00 mm.

From the perspective of assuring sufficient spinnability of the vinylidene fluoride resin, it is preferable to discharge the vinylidene fluoride resin while maintaining the temperature at 70 to 155°C in the discharge step. Maintaining the temperature of the vinylidene fluoride resin in this method may be performed by maintaining the temperature at directly below the spinneret for a certain time using, for example, a heating chamber.

Additionally, it is preferable to solidify the un-drawn fiber of vinylidene fluoride resin by cooling the discharged vinylidene fluoride resin. By so doing, it can be efficiently drawn in the subsequent drawing process. Note that the method for cooling the vinylidene fluoride resin is not particularly limited, but air cooling is preferred from the perspective of convenience.

In the spinning process, the melted resin discharged in the discharge step is spun at a prescribed draft ratio. By so doing, an un-drawn fiber of vinylidene fluoride resin having low orientation can be obtained. The draft ratio in the spinning process is preferably low, for example, from 20 to 300.

Then, the obtained vinylidene fluoride resin filaments are unified into a single bundle by, for example, bundling them with an oil ring or the like. Then, in the drawing process, the unified vinylidene fluoride resin filaments are drawn. By so doing, the fiber according to the present embodiment is obtained.

In the drawing process, the drawing temperature of the unified vinylidene fluoride resin filaments is, for example, from 70°C to 165°C, preferably from 80 to 160°C, and more preferably from 100 to 155°C. The draw ratio is, for example, from 2.50 times to 6.00 times, preferably from 3.00 to 5.80 times, and more preferably from 3.40 to 5.60 times.

After the drawing process, a relaxation or heat treatment may be performed on the fiber. Thermal shrinkage of the fiber can be suppressed by performing these treatments. Furthermore, the strength of the fiber can be improved by performing these treatments because the degree of crystallization of the fiber increases and the amorphous region becomes rigid. The relaxation temperature in the relaxation treatment is, for example, from 100 to 180°C, preferably from 110 to 170°C, and more preferably from 120 to 165°C. The relaxation rate is, for example, from 0 to 20%, preferably from 0 to 17%, and more preferably from 0 to 15%. The temperature in heat fixing is, for example, from 100 to 180°C, preferably from 110 to 170°C, and more preferably from 120 to 165°C.

According to the present invention, by setting the draft ratio in the spinning process to 60 to 300, the drawing temperature in the drawing process to 80 to 150°C, and the draw ratio to 3.0 to 5.50, the glass transition temperature of the obtained fiber can be controlled to not lower than -28°C and the thermal shrinkage at 100°C of the fiber can be not less than 2%.

Furthermore, by producing the fiber in the above method, a fiber having a glass transition temperature of not lower than -28°C, a thermal shrinkage at 100°C of not less than 2%, a tensile strength of not less than 2.0 cN/dtex, and elongation at break of not greater than 50% can be obtained.

Additionally, by producing the fiber in the above method, a fiber having a glass transition temperature of not lower than -27°C, a thermal shrinkage at 100°C of not less than 3%, a birefringence of not less than $40\times10^{-3}$, a tensile

strength of not less than 3.1 cN/dtex, and elongation at break of not greater than 40% can be obtained.

Such a fiber is advantageously used for the sheet-like structure to be described later, for example.

Applications of vinylidene fluoride resin fiber

As necessary, the vinylidene-fluoride-based resin fiber according to the present embodiment may undergo treatments such as antistatic, flame-retardancy, flameproofing, anti-bacterial, deodorization, and odor-resistance treatments or various surface processing treatments.

Furthermore, the sheet-like structure made from fiber according to the present embodiment may be produced by carrying out a process such as weaving or knitting using the vinylidene fluoride resin fiber according to the present embodiment. In this case, the process such as weaving or knitting may be carried out using well-known methods and equipment.

The sheet-like structure according to the present embodiment may be formed in a mesh form. In the sheet-like structure according to the present embodiment, the entire sheet may be formed in a mesh form or a portion of the sheet may be formed in a mesh form.

The format of the sheet-like structure according to the present embodiment is not particularly limited. For example, it may be used in various formats such as fabrics, knits, cords, cut fibers, papers, and nonwoven fabrics. The applications thereof are also not particularly limited. For example, it may be advantageously used in various industrial materials such as reinforced fibers for hollow fiber membranes, ropes and apparel, in medical base materials, in colored fibers, and in sensor devices as a piezoelectric substance. When the sheet-like structure according to the present embodiment is formed in a mesh form, it may be advantageously used as, for example, a fishing net.

Summary

As described above, one aspect of the vinylidene fluoride resin fiber according to the present invention is a fiber obtained using a plurality of vinylidene fluoride resin filaments, wherein the fiber has a glass transition temperature of not lower than - 28°C and a thermal shrinkage at 100°C of not less than 2%.

In one aspect of the vinylidene fluoride resin fiber according to the present invention, the birefringence is preferably not less than $30\times10^{-3}$.

In one aspect of the vinylidene fluoride resin fiber according to the present invention, the diameter of the fiber is preferably not less than 5 $\mu$m and less than 80 $\mu$m.

In one aspect of the vinylidene fluoride resin fiber according to the present invention, the vinylidene fluoride resin is preferably a homopolymer of a vinylidene fluoride monomer.

In one aspect of the vinylidene fluoride resin fiber according to the present invention, the vinylidene fluoride resin may be a vinylidene fluoride copolymer of a vinylidene fluoride monomer and another monomer, the other monomer being at least one type selected from the group consisting of hexafluoropropylene, trifluoroethylene, tetrafluoroethylene, and chlorotrifluoroethylene.

In one aspect of the vinylidene fluoride resin fiber according to the present invention, the vinylidene fluoride copolymer preferably contains not less than 90 mol% of a vinylidene fluoride monomer, and in the vinylidene fluoride resin fiber according to the present invention, the vinylidene fluoride resin is preferably a vinylidene fluoride homopolymer.

According to the present invention, the inherent viscosity of the vinylidene fluoride resin is not less than 0.75 dL/g and not greater than 0.90 dL/g.

In one aspect of the vinylidene fluoride resin fiber according to the present invention, preferably, the tensile strength is not less than 2.0 cN/dtex and the elongation at break is not greater than 50%.

In one aspect of the vinylidene fluoride resin fiber according to the present invention, more preferably, the birefringence is not less than $40\times10^{-3}$, the tensile strength is not less than 3.1 cN/dtex, and the elongation at break is not greater than 40%.

One aspect of the sheet-like structure according to the present invention is obtained using the vinylidene fluoride resin fiber of the present invention.

In one aspect of the sheet-like structure according to the present invention, the structure may be formed in a mesh form.

The present invention is not limited to the embodiments described above, and various modifications are possible within the scope indicated in the claims. Embodiments obtained by appropriately combining the technical means disclosed by other embodiments are also included in the technical scope of the present invention.

Examples

The vinylidene fluoride resin fibers in the following examples and comparative examples were all manufactured using a spinning apparatus (available from Fiber Extrusion Technology Ltd.).

Example 1

The vinylidene fluoride resin used was pellet-formed polyvinylidene fluoride (also called "PVDF" hereinafter; KF polymer available from Kureha Corporation; melting point 173°C; inherent viscosity 0.85 dL/g).
From the hopper of the spinning apparatus, the PVDF pellets were charged into a single screw extruder (cylinder diameter φ 25 mm), and the PVDF pellets were melted by heating at 265 to 270°C. The melted PVDF was spun at a draft ratio of 120 from a 24-hole nozzle (hole diameter 0.40 mm) using a gear pump, to produce 24 filaments made from PVDF, which were then coated with an oiling agent and unified to produce a fiber made from PVDF. Then at in-line drawing process, the fiber was drawn at a drawing temperature of 80°C with a draw ratio of 4.50, and then the PVDF was relaxed at a relaxation temperature of 130°C at a relaxation rate of 0% to produce an drawn fiber made from PVDF.

Example 2

A fiber was obtained in the same method as Example 1 except that the drawing temperature was 130°C and the draw ratio was 4.25.

Example 3

A fiber was obtained in the same method as Example 1 except that the drawing temperature was 130°C and the draw ratio was 3.50.

Example 4

A fiber was obtained in the same method as Example 1 except that the drawing temperature was 130°C and the draw ratio was 3.00.

Reference Example 5

A fiber was obtained in the same method as Example 1 except that the draft ratio was 60, the drawing temperature was 100°C, the draw ratio was 5.50, and the relaxation temperature was 100°C.

Example 6

A fiber was obtained in the same method as Example 1 except that the drawing temperature was 130°C, the draw ratio was 4.25, the relaxation temperature was 150°C, and the relaxation rate was 10%.

Comparative Example 1

A fiber was obtained in the same method as Example 1 except that the inherent viscosity of the PVDF used in Example 1 was changed to 1.00 dL/g, the nozzle diameter of spinneret in Example 1 was changed to 2 mm, the draft ratio was changed to 2550, and the fiber was not drawn.

Comparative Example 2

A fiber was obtained by once temporarily winding the un-drawn fiber obtained in Comparative Example 1, then drawing the wound un-drawn fiber to 1.16 times at a drawing temperature of 144°C in an off-line drawing process to produce a drawn fiber.

Comparative Example 3

Filaments were obtained using a draft ratio of 120 in Example 1.
The manufacturing conditions in the above Examples 1 to 6 and Comparative Examples 1 to 3 are summarized in Table 1 below.

Evaluation of vinylidene fluoride resin fiber

The vinylidene fluoride resin fibers obtained in Examples 1 to 6 and Comparative Examples 1 to 3 were evaluated with regard to filament diameter, average birefringence, glass transition temperature, thermal shrinkage at 100°C, tensile strength, and elongation at break. The results are shown in Table 1. The specific evaluation methods are described below.

Filament diameter

A filament of drawn fiber of PVDF measuring 1 m long was measured at 20 points with a micrometer and the average value was determined.

Tensile strength and elongation at break

Using a Tensilon tensile tester (available from Orientec Co., Ltd.), tensile strength and elongation at break of an un-drawn fiber (Comparative Example 1) were measured five times with a test sample length of 100 mm and a crosshead speed of 300 mm/minute, and those of a drawn fiber were measured five times with a test sample length of 300 mm and a crosshead speed of 300 mm/minute. Note that the results of strength and elongation at break are the average of the values at fracture (maximum point).

Glass transition temperature (Tg)

Using a dynamic viscoelasticity measuring device (DMS 6100, available from Seiko-I Instruments Inc.), dynamic viscoelasticity was measured with a test piece with length of 3 mm, at four frequencies of 0.5, 1.0, 5.0, and 10 Hz, in a measurement temperature range from -100°C to 180°C, at a temperature increasing rate of 2°C/minute. The glass transition temperature (Tg) was taken as the peak temperature of the dispersion derived from Tg occurring at a frequency of 10 Hz.

Thermal shrinkage at 100°C

100 m of a sample was reeled on a winder having a frame circumference of 1 m. One end of the obtained skein was fixed and a 20 g weight was applied to the other end, and the skein length L was measured. Then, the weight was removed and the skein was suspended in a 100°C dry oven and left for 30 minutes, and then cooled to room temperature. After that, one end of the skein was fixed and a 20 g weight was applied to the other end, and the skein length LHT was measured. The thermal shrinkage (%) was calculated using the following equation.

$$\text{Thermal shrinkage } (\%) = (L - LHT)/L \times 100$$

Here, L indicates the skein length before heat treatment (m) and LHT indicates the skein length after heat treatment (m).

Birefringence

A fiber was sheared on the diagonal using a utility knife, and several drops of an immersion fluid (immersion oil: n = 1.516 (23°C)) were added dropwise onto the sheared surface of the fiber. The birefringence (Δn) was determined by measuring retardation using a polarizing microscope and a Berek compensator available from Olympus Corporation.

8

EP 3 514 268 B1

[Table 1]

|  | Draft ratio (-) | Drawing temperature (°C) | Draw ratio (times) | Relaxation temperature (°C) | Relaxation rate (%) | Filament diameter (μm) | Tensile strength (cN/dtex) | Elongation at break (%) | Glass transition temperature (Tg) (°C) | Thermal shrinkage at 100°C (%) | Birefringence (×10$^{-3}$) |
|---|---|---|---|---|---|---|---|---|---|---|---|
| Example 1 | 120 | 80 | 4.50 | 130 | 0 | 18.9 | 4.3 | 14 | -19.5 | 13.2 | 63.7 |
| Example 2 | 120 | 130 | 4.25 | 130 | 0 | 19.2 | 4.6 | 15 | -21.8 | 9.3 | 53.4 |
| Example 3 | 120 | 130 | 3.50 | 130 | 0 | 20.6 | 3.5 | 24 | -25.7 | 8.5 | 49.5 |
| Example 4 | 120 | 130 | 3.00 | 130 | 0 | 22.4 | 2.6 | 42 | -27.6 | 8.7 | 46.6 |
| Reference Example 5 | 60 | 100 | 5.50 | 100 | 0 | 24.0 | 4.9 | 15 | -18.7 | 14.1 | 53.4 |
| Example 6 | 120 | 130 | 4.25 | 150 | 10 | 19.5 | 5.1 | 21 | -26.3 | 5.3 | 56.3 |
| Comparative Example 1 | 2550 | - | - | - | - | 40.0 | 3.8 | 30 | -29.4 | 0.1 | 48.0 |
| Comparative Example 2 | 2550 | 144 | 1.16 | 144 | 1 | 40.0 | 4.0 | 21 | -29.5 | 0.1 | 58.0 |
| Comparative Example 3 | 120 | - | - | - | - | 37.5 | 0.9 | 387 | -28.8 | 1.9 | 18.2 |

Industrial Applicability

The vinylidene fluoride resin fiber according to the present invention may be advantageously used in various formats such as fabrics, knits, and cords in various industrial materials such as fishnet, reinforced fibers of hollow fiber membranes, ropes and apparel, in medical base materials, in colored fiber, and sensor devices as a piezoelectric substance.

**Claims**

1.   A vinylidene fluoride resin fiber obtained using a plurality of vinylidene fluoride resin filaments, the fiber having a glass transition temperature of not lower than -28°C and a thermal shrinkage at 100°C of not less than 2%, wherein the inherent viscosity of the vinylidene fluoride resin is not less than 0.75 dL/g and not greater than 0.90 dL/g, wherein the glass transition temperature, the thermal shrinkage and the inherent viscosity are determined using the respective methods disclosed herein.

2.   The vinylidene fluoride resin fiber according to claim 1, wherein the average birefringence is not less than $30 \times 10^{-3}$, as determined using the method as disclosed herein.

3.   The vinylidene fluoride resin fiber according to claim 1 or 2, wherein the diameter of the filament is not less than 5 $\mu$m and less than 80 $\mu$m, as determined using the method as disclosed herein.

4.   The vinylidene fluoride resin fiber according to any one of claims 1 to 3, wherein the vinylidene fluoride resin is a homopolymer of a vinylidene fluoride monomer.

5.   The vinylidene fluoride resin fiber according to any one of claims 1 to 3, wherein the vinylidene fluoride resin is a vinylidene fluoride copolymer of a vinylidene fluoride monomer and another monomer, the other monomer being at least one type selected from the group consisting of hexafluoropropylene, trifluoroethylene, tetrafluoroethylene, and chlorotrifluoroethylene.

6.   The vinylidene fluoride resin fiber according to claim 5, wherein the vinylidene fluoride copolymer contains not less than 90 mol% of a vinylidene fluoride monomer.

7.   The vinylidene fluoride resin fiber according to any one of claims 1 to 6, wherein the tensile strength is not less than 2.0 cN/dtex and the elongation at break is not greater than 50%, as determined using the respective methods disclosed herein.

8.   The vinylidene fluoride resin fiber according to any one of claims 1 to 6, wherein the average birefringence is not less than $40 \times 10^{-3}$, the tensile strength is not less than 3.1 cN/dtex, and an elongation at break is not greater than 40%, as determined using the respective methods as disclosed herein.

9.   A sheet-like structure obtained using the vinylidene fluoride resin fiber described in any one of claims 1 to 8.

10.  The sheet-like structure according to claim 9, wherein the structure is formed in a mesh form.

**Patentansprüche**

1.   Vinylidenfluoridharzfaser, die unter Verwendung einer Vielzahl von Vinylidenfluoridharzfilamenten erhalten wird, wobei die Faser eine Glasübergangstemperatur von nicht niedriger als -28 °C und eine thermische Schrumpfung bei 100 °C von nicht geringer als 2 % aufweist, wobei die inhärente Viskosität des Vinylidenfluoridharzes nicht weniger als 0,75 dl/g und nicht mehr als 0,90 dl/g beträgt, wobei die Glasübergangstemperatur, die thermische Schrumpfung und die inhärente Viskosität unter Verwendung der jeweiligen hierin offenbarten Verfahren bestimmt werden.

2.   Vinylidenfluoridharzfaser nach Anspruch 1, wobei die durchschnittliche Doppelbrechung nicht weniger als $30 \times 10^{-3}$ beträgt, wie unter Verwendung des hierin offenbarten Verfahrens bestimmt.

**3.** Vinylidenfluoridharzfaser nach Anspruch 1 oder 2, wobei der Durchmesser des Filaments nicht weniger als 5 μm und weniger als 80 μm beträgt, wie unter Verwendung des hierin offenbarten Verfahrens bestimmt.

**4.** Vinylidenfluoridharzfaser nach einem der Ansprüche 1 bis 3, wobei das Vinylidenfluoridharz ein Homopolymer eines Vinylidenfluoridmonomers ist.

**5.** Vinylidenfluoridharzfaser nach einem der Ansprüche 1 bis 3, wobei das Vinylidenfluoridharz ein Vinylidenfluoridcopolymer eines Vinylidenfluoridmonomers und eines anderen Monomers ist, wobei das andere Monomer mindestens ein Typ ist, der aus der Gruppe ausgewählt ist, bestehend aus Hexafluorpropylen, Trifluorethylen, Tetrafluorethylen und Chlortrifluorethylen.

**6.** Vinylidenfluoridharzfaser nach Anspruch 5, wobei das Vinylidenfluoridcopolymer nicht weniger als 90 Mol-% eines Vinylidenfluoridmonomers enthält.

**7.** Vinylidenfluoridharzfaser nach einem der Ansprüche 1 bis 6, wobei die Zugfestigkeit nicht weniger als 2,0 cN/dtex beträgt und die Bruchdehnung nicht mehr als 50 % beträgt, wie unter Verwendung der hierin offenbarten jeweiligen Verfahren bestimmt.

**8.** Vinylidenfluoridharzfaser nach einem der Ansprüche 1 bis 6, wobei die durchschnittliche Doppelbrechung nicht weniger als $40\times10^{-3}$ beträgt, die Zugfestigkeit nicht weniger als 3,1 cN/dtex beträgt und eine Bruchdehnung nicht mehr als 40 % beträgt, wie unter Verwendung der hierin offenbarten jeweiligen Verfahren bestimmt.

**9.** Blattförmige Struktur, die unter Verwendung der in einem der Ansprüche 1 bis 8 beschriebenen Vinylidenfluoridharzfaser erhalten wird.

**10.** Blattförmige Struktur nach Anspruch 9, wobei die Struktur in einer Maschenform ausgebildet ist.

**Revendications**

**1.** Fibre de résine de fluorure de vinylidène obtenue à l'aide d'une pluralité de filaments de résine de fluorure de vinylidène, la fibre ayant une température de transition vitreuse n'excédant pas -28 °C et un retrait thermique à 100 °C n'excédant pas 2 %, dans lequel la viscosité inhérente de la résine de fluorure de vinylidène n'est pas inférieure à 0,75 dL/g et non supérieure à 0,90 dL/g, dans lequel la température de transition vitreuse, le retrait thermique et la viscosité inhérente sont déterminés à l'aide des procédés respectifs divulgués ici.

**2.** Fibre de résine de fluorure de vinylidène selon la revendication 1, dans laquelle la biréfringence moyenne n'est pas inférieure à $30 \times 10^{-3}$, tel que déterminé à l'aide du procédé tel que divulgué ici.

**3.** Fibre de résine de fluorure de vinylidène selon la revendication 1 ou 2, dans laquelle le diamètre du filament n'est pas inférieur à 5 μm et inférieur à 80 μm, tel que déterminé à l'aide du procédé tel que divulgué ici.

**4.** Fibre de résine de fluorure de vinylidène selon l'une quelconque des revendications 1 à 3, dans laquelle la résine de fluorure de vinylidène est un homopolymère d'un monomère de fluorure de vinylidène.

**5.** Fibre de résine de fluorure de vinylidène selon l'une quelconque des revendications 1 à 3, dans laquelle la résine de fluorure de vinylidène est un copolymère de fluorure de vinylidène d'un monomère de fluorure de vinylidène et d'un autre monomère, l'autre monomère étant au moins un type choisi dans le groupe constitué d'hexafluoropropylène, de trifluoroéthylène, de tétrafluoroéthylène et de chlorotrifluoroéthylène.

**6.** Fibre de résine de fluorure de vinylidène selon la revendication 5, dans laquelle le copolymère de fluorure de vinylidène ne contient pas moins de 90 % en mole d'un monomère fluorure de vinylidène.

**7.** Fibre de résine de fluorure de vinylidène selon l'une quelconque des revendications 1 à 6, dans laquelle la résistance à la traction n'est pas inférieure à 2,0 cN/dtex et l'allongement à la rupture n'est pas supérieur à 50 %, tel que déterminé à l'aide des procédés respectifs divulgués ici.

**8.** Fibre de résine de fluorure de vinylidène selon l'une quelconque des revendications 1 à 6, dans laquelle la biréfringence moyenne n'est pas inférieure à $40 \times 10^{-3}$, la résistance à la traction n'est pas inférieure à 3,1 cN/dtex, et un allongement à la rupture n'est pas supérieur à 40 %, tel que déterminé à l'aide des procédés respectifs tels que divulgués ici.

9. Structure de type feuille obtenue à l'aide de la fibre de résine de fluorure de vinylidène décrite dans l'une quelconque des revendications 1 à 8.

10. Structure de type feuille selon la revendication 9, dans laquelle la structure est formée sous une forme de treillis.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5941310 A
- JP S6028510 A
- US 3707592 A
- JP 2013055910 A

**Non-patent literature cited in the description**

- **ANJA LUND.** Melt Spinning of b-Phase Poly(vinylidene fluoride) Yarns With and Without a Conductive Core. *Journal of Applied Polymer Science,* 15 April 2011, vol. 120 (2), 1080-1089